(19) Europäisches Patentamt
European Patent Office
Office européen des brevets

(11) Veröffentlichungsnummer: **0 230 551**
**B1**

(12) **EUROPÄISCHE PATENTSCHRIFT**

(45) Veröffentlichungstag der Patentschrift: **27.09.89**

(51) Int. Cl.$^4$: **C08G 69/44**, C09K 19/38

(21) Anmeldenummer: **86116323.6**

(22) Anmeldetag: **25.11.86**

---

(54) **Vollaromatische Polyestercarbamide, deren Herstellung und Verwendung.**

---

(30) Priorität: **04.12.85 DE 3542777**

(43) Veröffentlichungstag der Anmeldung: **05.08.87 Patentblatt 87/32**

(45) Bekanntmachung des Hinweises auf die Patenterteilung: **27.09.89 Patentblatt 89/39**

(84) Benannte Vertragsstaaten: **BE CH DE FR GB IT LI LU NL SE**

(56) Entgegenhaltungen: **Keine Entgegenhaltungen**

(73) Patentinhaber: **BASF Aktiengesellschaft, Carl-Bosch-Strasse 38, D-6700 Ludwigshafen(DE)**

(72) Erfinder: **Kock, Hans-Jakob, Dr., Benckiserstrasse 63, D-6700 Ludwigshafen(DE)**

**EP 0 230 551 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind vollaromatische Polyestercarbamide, die unterhalb 300°C eine flüssig-kristalline fadenbildende Schmelze bilden.

Es sind schon eine Reihe von flüssig-kristallinen Polyesteramiden bekannt. Solche Polymere sind jedoch hinsichtlich ihrer Wärmeformbeständigkeit und ihrer Verarbeitbarkeit verbesserungsbedürftig. In der US-PS 4 355 132 werden Polyesteramide aufgebaut aus Naphthalindicarbonsäure, 4-Hydroxybenzoesäure, Aminophenol und ggf. Isophthalsäure und Hydrochinon beschrieben. Solche Polymere haben jedoch Glastemperaturen um 110°C. In der US-PS 4 330 457 werden Polyesteramide aufgebaut aus Hydroxynaphthalincarbonsäure, Terephthalsäure, Hydrochinon und p-Aminophenol beschrieben. Solche Polyesteramide haben jedoch eine Glasübergangstemperatur von etwa 105°C. Das gleiche gilt für die aus der US-PS 4 351 917 bekannten Polyesteramide, die aus p-Aminobenzoesäure, p-Hydroxybenzoesäure und Hydroxynaphthalincarbonsäure aufgebaut sind. Aus der US-PS 4 473 681 sind auch bereits Polyestercarbamide bekannt, die aus Hydroxynaphthalincarbonsäure, Dihydroxyarylverbindungen sowie N,N'-Bis(carboxyphenyl)harnstoff aufgebaut sind. Die erhaltenen Polyestercarbamide weisen mit einer Glasübergangstemperatur von 120°C keine ausreichende Wärmeformbeständigkeit auf.

Es war deshalb die technische Aufgabe gestellt, vollaromatische Polyestercarbamide zur Verfügung zu stellen, die unterhalb 300°C eine flüssig-kristalline fadenbildende Schmelze bilden und sich somit leicht verarbeiten lassen und darüber hinaus eine hohe Wärmeformbeständigkeit sowie eine gute Abriebfestigkeit aufweisen.

Diese Aufgabe wird gelöst durch vollaromatische Polyestercarbamide, die unterhalb 300°C eine flüssig-kristalline fadenbildende Schmelze bilden, aufgebaut aus

a) mindestens 20 Mol.% wiederkehrenden Einheiten der Formel I

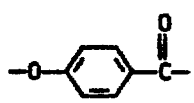

I

b) 5 bis 15 Mol.% wiederkehrenden Einheiten der Formel II

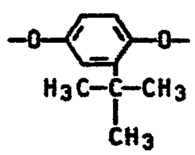

II

c) 5 bis 15 Mol.% wiederkehrenden Einheiten der Formel III

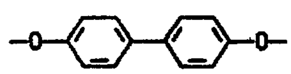

III

d) 1 bis 10 Mol.% wiederkehrenden Einheiten der Formel IV

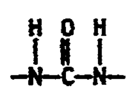

IV

e) einer Summe aus den Komponenten b), c) und d) entsprechenden molaren Menge an wiederkehrenden Einheiten der Formel V

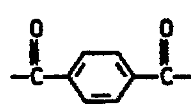

V

wobei sich die Summe der Molprozente der Komponenten a), b), c), d) und e) jeweils auf 100 Mol.% ergänzen.

Die neuen Polyestercarbamide haben den Vorteil, daß sie bei einer Temperatur unter 300°C eine flüssig-kristalline fadenbildende Schmelze bilden und leicht verarbeitbar sind. Weiter haben die neuen Polyestercarbamide den Vorteil, daß sie eine gute Wärmeformbeständigkeit und gute mechanische Werte aufweisen. Ferner haben die neuen Polyestercarbamide den Vorteil, daß sie eine glatte abriebfeste Oberfläche aufweisen.

Der flüssig-kristalline Zustand der Polyestercarbamide kann mit dem Polarisationsmikroskop nach einer in der DE-AS 25 20 819 beschriebenen Methode nachgewiesen werden. Zwischen gekreuzten Polarisatoren weisen die Polymerschmelzen die in einer Schichtdicke von 10 µm zwischen Glasplatten aufgetragen sind, Texturen auf, die einer mesomorphen Phase zugeordnet werden können.

Die erfindungsgemäßen Polyestercarbamide sind aufgebaut aus

a) mindestens 20 Mol.% wiederkehrenden Einheiten der Formel (I)

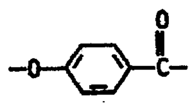

I

eine geeignete Ausgangsverbindung ist z.B. p-Hydroxybenzoesäure.

b) 5 bis 15 Mol.% wiederkehrenden Einheiten der Formel (II)

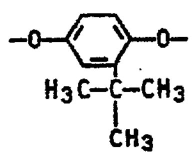

II

eine geeignete Ausgangsverbindung ist beispielsweise t-Butylhydrochinon.

c) 5 bis 15 Mol.% wiederkehrenden Einheiten der Formel (III)

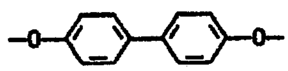

III

eine geeignete Ausgangsverbindung ist z.B. 4,4'-Dihydroxybiphenyl.

d) 1 bis 10 Mol.% wiederkehrenden Einheiten der Formel (IV)

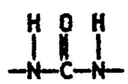

IV

eine bevorzugte Ausgangsverbindung ist Harnstoff.

e) einer Summe aus b), c) und d) entsprechenden molaren Menge an wiederkehrenden Einheiten der Formel V

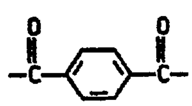

V

eine geeignete Verbindung ist beispielsweise Terephthalsäure. Es versteht sich, daß sich die Summe der Mol.% der Komponenten a), b), c), d) und e) jeweils auf 100 Mol.% ergänzen.

Vorteilhaft wird in der Komponente b) ein Teil der wiederkehrenden Einheiten der Formel II ersetzt durch

f) wiederkehrenden Einheiten der Formel VI

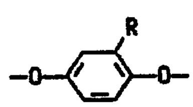

VI

in der R einen $C_1$- bis $C_4$-Alkylrest, ausgenommen den tertiär-Butylrest, ein Halogenatom oder einen Phenylrest, der gegebenenfalls Methylgruppen als Substituenten enthalten kann.

Geeignete Ausgangsverbindungen sind beispielsweise Methylhydrochinon, Ethylhydrochinon, Isopropylhydrochinon, Chlorhydrochinon oder Phenylhydrochinon.

Vorteilhaft beträgt der Gehalt an wiederkehrenden Einheiten der Formel VI 2 bis 10 Mol.%.

Es hat sich ferner als vorteilhaft erwiesen, wenn in den Polyestercarbamiden der molare Anteil der Summe der Komponenten b) und d) 15 bis 20 Mol.% beträgt.

In anderen vorteilhaften Polyestercarbamiden ist ein Teil der Komponente c) ersetzt durch mindestens eine der wiederkehrenden Einheiten der Formeln VII, VIII oder IX

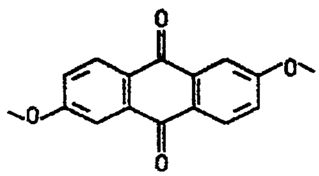

VII

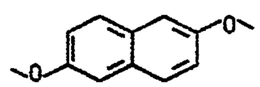

VIII

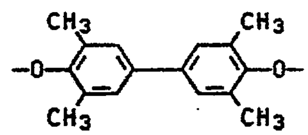

IX

Eine geeignete Ausgangsverbindung für die wiederkehrenden Einheiten der Formel VII ist beispielsweise 2,6-Dihydroxyanthrachinon, für wiederkehrende Einheiten der Formel VII 2,6-Dihydroxynaphthalin und für wiederkehrende Einheiten der Formel IX 3,3′-5,5′-Tetramethyl-4,4′-dihydroxybiphenyl. Vorteilhaft beträgt der Anteil an wiederkehrenden Einheiten der Formeln VII, VIII und/oder IX 2 bis 10 Mol.%.

Bevorzugte vollaromatische flüssig-kristalline Polyestercarbamide haben eine Glasübergangstemperatur Tg von ≧ 160°C, insbesondere ≧ 170°C. Die Glastemperatur soll dabei gemessen werden mit der DSC-Methode, wie sie beschrieben ist von K.A. Illers und anderen in Makromolekulare Chemie, Band 127 (1969), Seite 1 ff. Die vollaromatischen flüssig-kristallinen Polyestercarbamide bilden bei einer Temperatur < 300°C, insbesondere < 290°C eine flüssig-kristalline fadenbildende Schmelze. Bevorzugt sind auch flüssig-kristalline Polyestercarbamide, die bei einer Temperatur > 220°C und < 280°C Teilkristallinität aufweisen.

Die erfindungsgemäßen flüssig-kristallinen Polyestercarbamide sind beispielsweise erhältlich durch eine analoge Arbeitsweise, wie sie in der US-PS 4 375 530 und US-PS 4 118 372 beschrieben werden. Die Massekondensation umfaßt im allgemeinen eine Alkanoylierungsstufe, in der die eingesetzten Monomeren mit Säureanhydriden umgesetzt werden und eine Polymerisationsstufe, in der das Polykondensat unter Abspaltung von aliphatischen Carbonsäuren gebildet wird. Verfahren, bei denen eine Vorpolymerisationsstufe zwischengeschaltet wird, sind aus der DE-OS 33 20 118 zu entnehmen. Die beschriebenen Verfahren benötigen allerdings Reaktionszeiten von mehr als 10 Stunden.

Nach einer vorteilhaften Arbeitsweise erhält man die erfindungsgemäßen Polyestercarbamide in einem Einstufenverfahren, bei dem man die nicht- derivatisierten Ausgangsstoffe im beschriebenen molaren Verhältnis unter Verwendung von Anhydriden niederer Fettsäuren, z.B. Fettsäuren mit 2 bis 4 Kohlenstoffatomen, insbesondere Essigsäureanhydrid umsetzt. Es ist möglich, hierbei Katalysatoren, wie sie für Polykondensationen üblich sind, in Mengen von 0,001 bis 1 Mol.% mitzuverwenden. Bei der Umsetzung werden die nicht-derivatisierten Ausgangsstoffe zusammen mit Fettsäureanhydrid vorteilhaft in einem mindestens 5 %igen molaren Überschuß, bezogen auf die vorhandenen Hydroxy- und Aminogruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden vorzugsweise bis zu 2 Stunden auf 130 bis 170°C. Anschließend wird die Temperatur z.B. innerhalb von 2 bis 2 1/2 Stunden auf 250 bis 350°C gesteigert. Hierbei werden überschüssige Fettsäureanhydride und Fettsäuren abdestilliert. Um die Reaktion zu vervollständigen, hat es sich als vorteilhaft erwiesen, gegen Ende der Umsetzung verminderten Druck z.B. bis zu 0,5 mbar anzuwenden.

Bemerkenswert und nicht vorherzusehen bei der Anwendung dieses Einstufenverfahrens ist zunächst die problemlose und vollständige Reaktion auch ohne Katalysatorzusatz zu den gewünschten Polymeren in einer relativ kurzen Zeit. Dies ist umso erstaunlicher als durch die Vielzahl chemisch unterschiedlicher Hydroxygruppen und insbesondere durch die Mitverwendung von Harnstoff eine Abstufung der Reaktivitäten und damit ein mangelhafter polymerer Aufbau zu erwarten wäre.

Die so erhaltenen vollaromatischen flüssig-kristallinen Polyestercarbamide werden vorteilhaft nach der Kondensation in der Schmelze in festem Zustand z.B. bei einer Temperatur von 150 bis 250°C bis zur

gewünschten Viskosität weiterkondensiert. Diese Nachkondensation in fester Phase kann sowohl vor als auch nach einer thermoplastischen Verarbeitung erfolgen. Die Festphasenkondensation führt man vorteilhaft in Inertgasatmosphäre, z.B. Stickstoff durch.

Die Polyestercarbamide gemäß der Erfindung können übliche Zusatz- und Hilfsstoffe in wirksamen Mengen enthalten. Übliche Zusatzstoffe sind z.B. Stabilisatoren gegen Abbau durch molekularen Sauerstoff, Wärme oder UV-Licht, z.B. sterisch gehinderte Phenole, Hydrochinone, substituierte Resorcine, Salicylate, Benztriazole oder Benzophenone.

Andere geeignete Zusatzstoffe sind Farbstoffe und Pigmente wie Nigrosin, Titandioxid, Phthalocyanine.

Geeignete Zusätze sind auch faser- und pulverförmige Füllstoffe und Verstärkungsmitteln in Mengen bis zu 70 Gew.%, wie Kohlenstoff-fasern, Glasfasern, amorphe Kieselsäure, Asbest, Calciumsilikat, Aluminiumsilikat, Magnesiumcarbonat, Kreide oder Feldspat.

Die erfindungsgemäßen vollaromatischen flüssig-kristallinen Polyestercarbamide eignen sich zur Herstellung von Fasern, Fäden, Folien, Schäumen und technischen Formteilen durch Spritzguß, Pressen oder Extrusion. Die aus den erfindungsgemäßen Polyestercarbamiden hergestellten Formteile zeichnen sich durch hervorragende mechanische Eigenschaften, wie Steifigkeit und Festigkeit aus. Sie sind weitgehend chemikalienresistent und flammwidrig. Zudem besitzen sie eine hohe Wärmeformbeständigkeit und eine glatte abriebfeste Oberfläche. Die erfindungsgemäßen Polyestercarbamide eignen sich daher hervorragend zur Herstellung von Formteilen für die Elektro- und Datentechnik im Fahrzeugbau und andere technisch Bereiche. Sie können aber auch als Überzugs- und Beschichtungsmittel pulverförmig dispergiert oder als Film verwendet werden.

Die Erfindung sei an folgenden Beispielen veranschaulicht.

Beispiel 1

0,2 mol Terephthalsäure, 0,26 mol 4-Hydroxybenzoesäure, 0,16 mol t-butyl-Hydrochinon, 0,02 mol 4,4'-Dhydroxybiphenyl, 0,02 mol Harnstoff sowie 0,86 mol Essigsäureanhydrid werden in einem Kolben mit Rührer, Stickstoffeinleitung und einem Destillationsaufsatz eingewogen und unter $N_2$-Atmosphäre in einem Metallbad auf 100°C erhitzt. Die Temperatur wird dann in 30' auf 150°C, in weiteren 100' auf 200°C und anschließend in 120' auf die Endtemperatur von 350°C erhöht.

Anschließend wird der Druck auf 560 mbar und dann alle 10' auf die Hälfte verringert. Das Endvakuum beträgt 10 mbar. Man erhält so eine hochviskose, fadenbildende Schmelze. Polymerschmelze und erstarrtes Polymere zeigen einen perlmuttartigen Glanz. Aus DSC-Messungen ergibt sich eine Glastemperatur von 181°C. Die inhärente Viskosität beträgt 1,1 dl/g, gemessen in 0,5 gew.%iger Lösung in 4-Chlorphenol bei 50°C.

Das Polymere zeigt im Polymerisationsmikroskop zwischen gekreuzten Polarisatoren Texturen, die für LC-Polymere typisch sind.

Beispiel 2

0,2 mol Terephthalsäure, 0,26 mol 4-Hydroxybenzoesäure, 0,02 mol 4,4'-Dihydroxybiphenyl, 0,17 mol t-butyl-Hydrochinon, 0,01 mol Harnstoff sowie 0,86 mol Essigsäureanhydrid wurden entsprechend Beispiel 1 umgesetzt. Das flüssig-kristalline Polyestercarbamid hat eine Glastemperatur von 181°C und eine inhärente Viskosität von 1,2 dl/g.

**Patentansprüche**

1. Vollaromatische Polyestercarbamide, die unterhalb 300°C eine flüssig-kristalline fadenbildende Schmelze bilden aufgebaut aus

a) mindestens 20 Mol.% wiederkehrenden Einheiten der Formel I

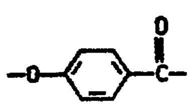

I

b) 5 bis 15 Mol.% wiederkehrenden Einheiten der Formel II

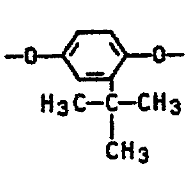

II

c) 5 bis 15 Mol.% wiederkehrenden Einheiten der Formel III

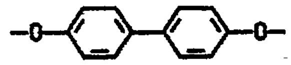

III

d) 1 bis 10 Mol.% Einheiten der Formel IV

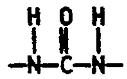

IV

e) einer Summe aus den Komponenten b), c) und d) entsprechenden molaren Menge an wiederkehrenden Einheiten der Formel V

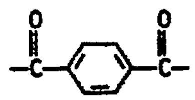

V

wobei sich die Summe der molaren Anteile der Komponenten a, b, c, d und e jeweils auf 100 Mol.% ergänzen.

2. Vollaromatische Polyestercarbamide nach Anspruch 1, dadurch gekennzeichnet, daß in der Komponente b) ein Teil der wiederkehrenden Einheiten der Formel II ersetzt ist durch

f) wiederkehrenden Einheiten der Formel VI

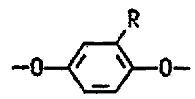

VI

in der R einen $C_1$- bis $C_4$-Alkylrest, ausgenommen den tertiär- Butylrest, einen Phenylrest oder ein Halogenatom bezeichnet.

3. Vollaromatische Polyestercarbamide nach Anspruch 2, dadurch gekennzeichnet, daß sie 2 bis 10 Mol.% wiederkehrende Einheiten der Formel VI enthalten.

4. Vollaromatische Polyestercarbamide nach Anspruch 1, dadurch gekennzeichnet, daß die Summe der Komponenten b) und d) 15 bis 20 Mol.% beträgt.

5. Vollaromatische Polyestercarbamide nach Anspruch 1, dadurch gekennzeichnet, daß in der Komponente c) ein Teil der wiederkehrenden Einheiten III ersetzt ist durch mindestens eine der folgenden wiederkehrenden Einheiten

g) wiederkehrenden Einheiten der Formel VII

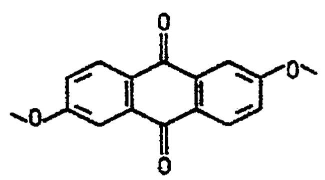

VII

h) wiederkehrenden Einheiten der Formel VIII

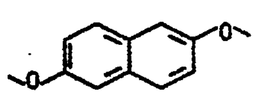

VIII

i) wiederkehrenden Einheiten der Formel IX

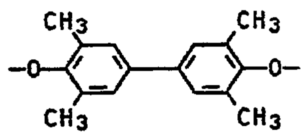

IX

6. Vollaromatische Polyestercarbamide nach Anspruch 5, dadurch gekennzeichnet, daß der molare Anteil der wiederkehrenden Einheiten der Formeln VII, VIII und/oder IX 2 bis 10 Mol.% beträgt.

7. Vollaromatische Polyestercarbamide nach den Ansprüchen 1 bis 6, dadurch gekennzeichnet, daß sie eine Glasübergangstemperatur Tg ≧ 160°C haben.

8. Verfahren zur Herstellung von vollaromatischen Polyestercarbamiden nach den Ansprüchen 1 bis 7, dadurch gekennzeichnet, daß man die Monomeren in Form der underivatisierten Hydroxy-, Amino- bzw. Carboxyverbindungen in einem Einstufenverfahren und in den beschriebenen Molverhältnissen unter Zusatz von überschüssigem Fettsäureanhydrid bei erhöhter Temperatur umsetzt und Fettsäureanhydrid und Fettsäure aus dem Reaktionsgemisch abdestilliert.

9. Verfahren nach Anspruch 8, dadurch gekennzeichnet, daß man die vollaromatischen Polyestercarbamide nach der Kondensation in der Schmelze durch Kondensation in fester Phase bei einer Temperatur von 150 bis 250°C nachkondensiert.

10. Verwendung von vollaromatischen Polyestercarbamiden nach den Ansprüchen 1 bis 8 zur Herstellung von Fasern, Folien und Formteilen sowie Überzügen.

**Claims**

1. A wholly aromatic polyester carbamide which forms a liquid-crystalline fiber-forming melt below 300°C and is composed of

a) not less than 20 mol% of repeat units of the formula I

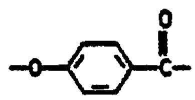

I

b) from 5 to 15 mol% of repeat units of the formula II

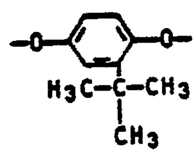

II

c) from 5 to 15 mol% of repeat units of the formula III

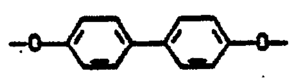

III

d) from 1 to 10 mol% of units of the formula IV

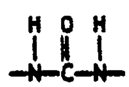

IV

e) a molar amount corresponding to the total amount of components b), c) and d) of repeat units of the formula V

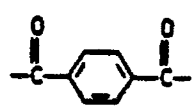

V

the molar proportions of components a), b), c), d) and e) adding up to 100 mol% in each case.

2. A wholly aromatic polyester carbamide as claimed in claim 1, wherein in component b) some of the repeat units of the formula II are replaced by

f) repeat units of the formula VI

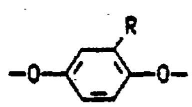

VI

where R is $C_1$-$C_4$-alkyl (except tertiary butyl), phenyl or halogen.

3. A wholly aromatic polyester carbamide as claimed in claim 2, which contains from 2 to 10 mol% of repeat units of the formula VI.

4. A wholly aromatic polyester carbamide as claimed in claim 1, wherein the total amount of components b) and d) is from 15 to 20 mol%.

5. A wholly aromatic polyester carbamide as claimed in claim 1, wherein in component c) some of the repeat units III are replaced by one or more of the following repeat units

g) repeat units of the formula VII

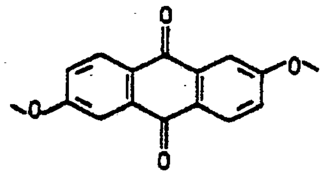

VII

h) repeat units of the formula VIII

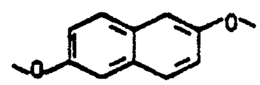

VIII

i) repeat units of the formula IX

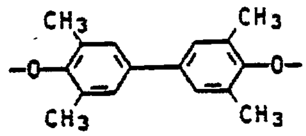

IX

6. A wholly aromatic polyester carbamide as claimed in claim 5, wherein the molar proportion of the repeat units of the formulae VII, VIII and/or IX is from 2 to 10 mol%.

7. A wholly aromatic polyester carbamide as claimed in claims 1 to 6, which has a glass transition temperature Tg ≥ 160°C.

8. A process for preparing a wholly aromatic polyester carbamide as claimed in claims 1 to 7 by reacting the monomers in the form of the underivatized hydroxy, amino and carboxy compounds in a single-stage process and in the molar ratios described in the presence of excess fatty acid anhydride at elevated temperatures and distilling fatty acid anhydride and fatty acid out of the reaction mixture.

9. A process as claimed in claim 8, wherein the wholly aromatic polyester carbamide, after the condensation in the melt, is postcondensed in the solid phase at 150–250°C.

10. The use of a wholly aromatic polyester carbamide as claimed in claims 1 to 8 for producing fibers, films, moldings and surface-coating materials.

**Revendications**

1. Carbamides de polyesters totalement aromatiques, qui, en dessous de 300°C, forment une masse fondue liquide-cristalline engendrant des fils, constitués de

a) au moins 20% molaires d'unités récurrentes de la formule I

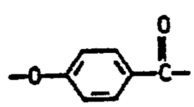

I

b) de 5 à 15% molaires d'unités récurrentes la formule II

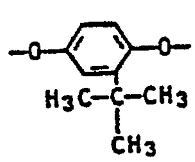

II

c) de 5 à 15% molaires d'unités récurrentes de la formule III

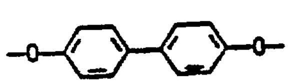

III

d) de 1 à 10% molaires d'unités de la formule IV

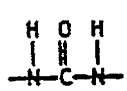

IV

e) une proportion molaire correspondant à la somme des composants b), c) et d) d'unités récurrentes de la formule V

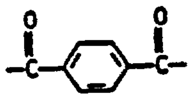

V

dans laquelle la somme des fractions molaires des composants a, b, c, d et e totalise à chaque fois 100% molaires.

2. Carbamides de polyesters totalement aromatiques suivant la revendication 1, caractérisés en ce que, dans le composant b), une partie des unités récurrentes de la formule II est remplacée par

f) des unités récurrentes de la formule VI

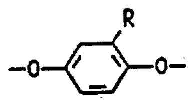

VI

dans laquelle R représente un radical alkyle en $C_1$ à $C_4$, à l'exception du radical butyle tertiaire un radical phényle ou un atome d'halogène.

3. Carbamides de polyesters totalement aromatiques selon la revendication 2, caractérisés en ce qu'ils contiennent de 2 à 10% molaires d'unités récurrentes de la formule VI.

4. Carbamides de polyesters totalement aromatiques selon la revendication 1, caractérisés en ce que la somme des composants b) et d) atteint de 15 à 20% molaires.

5. Carbamides de polyesters totalement aromatiques suivant la revendication 1, caractérisés en ce que, dans le composant c, une partie des unités récurrentes III est remplacée par au moins l'une des unités qui suivent:

g) des unités récurrentes de la formule VII

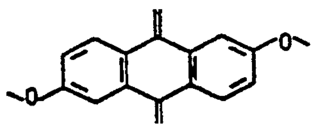

VII

h) des unités récurrentes de la formule VIII

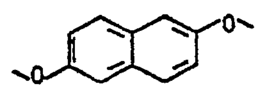

VIII

i) des unités récurrentes de la formule IX

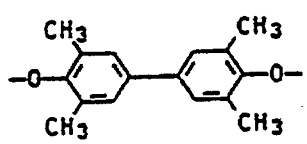

IX

6. Carbamides de polyesters totalement aromatiques suivant la revendication 5, caractérisés en ce que la fraction molaire des unités récurrentes des formules VII, VIII et/ou IX atteint de 2 à 10% molaires.

7. Carbamides de polyesters totalement aromatiques selon les revendications 1à 6, caractérisés en ce qu'ils possèdent une température de transition vitreuse Tg ≥ 160°C.

8. Procédé de fabrication de carbamides de polyesters totalement aromatiques selon les revendications, 1 à 7, caractérisé en ce que l'on fait a réagir les monomères sous forme de composes du type carboxy, amino ou hydroxy, non transformés en dérivés, au cours d'un procéde en une étape et dans les proportions molaires susmentionnées, à température élevée et sous addition d'anhydride d'acide gras excédentaire et on chasse l'anhydride d'acide gras et l'acide gras du mélange réactionnel par distillation.

9. Procéde suivant la revendication 8, caractérisé en ce que l'on post-condense les carbamides de polyesters totalement aromatiques, après la condensation à l'état fondu, par condensation en phase solide à une température de 150 à 250°C.

10. Utilisation de carbamides de polyesters totalement aromatiques selon les revendications 1 à 8, pour la fabrication de fibres, de feuilles et d'articles moulés, comme aussi de revêtements.